(19) **Europäisches Patentamt**
**European Patent Office**
**Office européen des brevets**

(11) **EP 1 658 702 B1**

(12) **EUROPEAN PATENT SPECIFICATION**

(45) Date of publication and mention
of the grant of the patent:
**27.02.2008 Bulletin 2008/09**

(51) Int Cl.:
**H04L 12/56** (2006.01)

(21) Application number: **03818396.8**

(22) Date of filing: **28.08.2003**

(86) International application number:
**PCT/IB2003/003586**

(87) International publication number:
**WO 2005/022844 (10.03.2005 Gazette 2005/10)**

(54) **RESOURCE MANAGEMENT SYSTEM AND METHOD FOR ENSURING QOS IN INTERNET PROTOCOL (IP) NETWORKS**

BETRIEBSMITTEL-VERWALTUNGSSYSTEM UND VERFAHREN ZUR SICHERSTELLUNG VON QOS IN NETZWERKEN MIT INTERNET-PROTOKOLL (IP)

SYSTEME ET PROCEDE DE GESTION DE RESSOURCES PERMETTANT D'ASSURER UNE QUALITE DE SERVICE QOS DANS DES RESEAUX BASES SUR LE PROTOCOLE INTERNET

(84) Designated Contracting States:
**AT BE BG CH CY CZ DE DK EE ES FI FR GB GR HU IE IT LI LU MC NL PT RO SE SI SK TR**

(43) Date of publication of application:
**24.05.2006 Bulletin 2006/21**

(73) Proprietor: **TELEFONAKTIEBOLAGET LM ERICSSON (publ)**
**164 83 Stockholm (SE)**

(72) Inventor: **BADER, Attila**
**H-2151 Fot (HU)**

(74) Representative: **von Zmuda-Trzebiatowski, Margarethe et al**
**Ericsson GmbH**
**Ericsson Allee 1**
**52134 Herzogenrath (DE)**

(56) References cited:
**EP-A- 0 944 289** **US-A- 3 974 340**
**US-A1- 2002 136 162**

• **KELLY T: "AN ECN PROBE-BASED CONNECTION ACCEPTANCE CONTROL" COMPUTER COMMUNICATION REVIEW, ASSOCIATION FOR COMPUTING MACHINERY. NEW YORK, US, vol. 31, no. 3, July 2001 (2001-07), pages 14-25, XP001115319 ISSN: 0146-4833**
• **SISALEM D ET AL: "LDA+: a TCP-friendly adaptation scheme for multimedia communication" MULTIMEDIA AND EXPO, 2000. ICME 2000. 2000 IEEE INTERNATIONAL CONFERENCE ON NEW YORK, NY, USA 30 JULY-2 AUG. 2000, PISCATAWAY, NJ, USA,IEEE, US, 30 July 2000 (2000-07-30), pages 1619-1622, XP010512818 ISBN: 0-7803-6536-4**

**EP 1 658 702 B1**

Printed by Jouve, 75001 PARIS (FR)

## Description

## BACKGROUND OF THE INVENTION

Technical Field of the Invention

The present invention relates to a resource management system and method for ensuring Quality of Service (QoS) in Internet Protocol (IP) networks. In particular, and not by way of limitation, the present invention is directed to a system and method for ensuring QoS for real-time traffic in an IP network using only functionalities implemented in the IP network layer and the underlying layers.

Description of Related Art

IP networks were designed originally for best efforts data services. Recently, there has been increasing demand to use IP networks for transmitting real-time traffic like voice, multimedia, or other delay-sensitive and jitter-sensitive traffic types. There are also plans to use IP as a backbone in mobile access networks, where, due to the mobility of the users, there are strict delay requirements and other QoS requirements for all traffic types. For voice communication, traditionally, circuit-switched networks, such as the Public Switched Telephone Network (PSTN), have been used. Later, other connection-oriented transmission methods, such as Asynchronous Transfer Method (ATM), were developed. ATM networks, using different ATM Adaptation Layers over the ATM layer, are able to efficiently transmit different traffic types (both real-time and non-real-time) in the same network.

In connection-oriented networks, a new connection is established by using signaling. When a new connection is requested, the transmission path is defined, and the necessary bandwidth is reserved in each switch and link along the path for the duration of the call. The connection is established only if there is enough bandwidth for the new connection. In this way QoS is ensured for each ongoing call.

IP networks, on the other hand, are packet-switched networks that use a connectionless transmission mode. In IP networks, each packet is routed individually, and the call-setup signaling used in circuit-switched networks is not utilized between source and destination nodes and the intermediate routers. IP ensures neither that the packets of a call are routed in the same path, nor that the packets arrive in the same order in which they are sent.

IP itself does not do bandwidth reservation and does not provide a QoS guarantee for the transported traffic. If more packets arrive in a router than can be served at any one time, the excess packets are queued at the egress ports of the router.

If different QoS classes are defined and priorities are established between the classes, the packets of the delay-sensitive traffic classes can be assigned a higher priority than the packets belonging to other traffic classes, thereby assuring that the delay-sensitive packets are served first in the routers. QoS differentiation improves the QoS of the delay sensitive traffic. This is realized by the DiffServ architecture in IP networks.

Nevertheless, packets belonging to a delay-sensitive traffic class may, under some circumstances, still have to wait for a considerable period of time, and delay requirements may not be met. Additionally, if the queues at the routers are filled up, packets may have to be dropped. Usually an algorithm is used in order to maintain the load of the queues. An exemplary load-balancing algorithm is shown in EP 1217749, which is hereby incorporated by reference herein.

Several existing resource management methods have been tried in order to ensure QoS for new real-time traffic calls, and to avoid congestion of the routers in the IP network. QoS for real-time traffic in IP networks can be provided by using additional protocols or functions. One of the most commonly used protocols for this purpose is described in "Resource Reservation Protocol (RSVP), R. Braden et al., RFC 2205, Sep. 1995". Using RSVP, when a call request arrives at the gateway of the network, a PATH message is sent to the destination node, which establishes the path for the corresponding traffic flow and describes the capabilities required to support the new call. The destination node answers the PATH message with a RESV message, traveling back through the same routers in the same route as the PATH message. The RESV message makes the necessary bandwidth reservations in each router in order to satisfy the QoS requirements. The reservation states are soft states, which have to be maintained by refresh messages during the call. An admission control mechanism ensures that the call is admitted if the necessary bandwidth is available in each router along the path.

The RSVP method, however, has its disadvantages. As noted, the RSVP method uses a per-flow resource reservation method. The reservation states are soft states, which must be refreshed periodically. If the number of flows is high, the volume of signaling required to make the reservations in each router can be very high, reducing the network resources that are available for user traffic. A further problem is that the resource reservation information must be distributed among the routers of the network, and the routers must be set up for each call. This process can be slow in the case of a large network, resulting in a lengthy call-establishment time.

Another known solution to ensure QoS is also based on per-flow bandwidth provisioning and reservation. Such a method is described in EP 0999674. In this method, the available bandwidth capacity in the routers is monitored and maintained. A Virtual Provisioning Server is utilized to monitor the available bandwidth along each network path and signal these data to a Signaling Gateway. The Signaling Gateway runs an admission control algorithm to decide whether the available bandwidth is enough to provide the required QoS for a new delay-sensitive call. Resource reservations can be done statically or dynamically.

With this per-flow provisioning reservation method, there are scalability problems similar to those experienced with the RSVP method. These problems can partly be solved utilizing trunk reservations. This means that several individual path reservations are aggregated into one trunk reservation. However, regardless of whether resource reservations are made statically or dynamically, the efficient configuration of trunk reservations is difficult, and a complicated admission control mechanism is required. Additionally, as discussed in "Analysis of Existing QoS Solutions, de Meer et. al, internet draft, Nov. 2002", if a large number of communication paths are maintained and dynamic provisioning is utilized, the number of reservation states can still be high, even if trunk reservations are utilized.

In EP 1168755, an admission control method is described that is based on Real-time Transport Protocol (RTF) and on the performance indicators of the Real-time Transport Control Protocol (RTCP) "H. Schulzrinne et al.: RTP: A Transport Protocol for Real Time Applications, RFC 1889". RTP provides end-to-end transport functionality for real-time data transfer over an IP network. The transport of the RTP sessions is monitored by RTCP and provides statistics about the QoS performance of the ongoing calls. An admission control algorithm based on the RTCP performance indicators in the Internet Telephony Gateway decides whether to accept a new incoming call.

The disadvantages of this method include the fact that the method requires the use of the RTP and RTCP protocol, or similar transport protocols that monitor and measure the QoS performance of ongoing calls in real-time. This requires considerable processing capacity.

EP 0944289 describes a traffic monitoring and QoS evaluation method that use time stamps of the real time ATM cells. In an edge device real-time test packets are generated and provided by time cells. In another point of the network the arrival time of the test packets are measured. The QoS of the monitored traffic is estimated by network simulation. This method requires knowledge of the network topology in the evaluation point, and can be applied for ATM networks.

Thus, although the above-mentioned methods are suitable for improving QoS for real-time traffic, each of them has disadvantages that limit their applicability. It would be desirable to have a resource management method for IP networks that is fast, and that utilizes the resources of the IP network in an efficient manner. Such a method would use only functionalities implemented in the IP network layer and the underlying layers, and would utilize an algorithm that is simple and fast. The method would not require high processing capacity, and it would be easy to implement. The present invention provides such a method.

## SUMMARY OF THE INVENTION

In one aspect, the present invention is directed to a method of ensuring Quality of Service (QoS) in an Internet Protocol (IP)-based network having at least one Ingress Gateway (IG), at least one Egress Gateway (EG), and at least one intermediate router for routing incoming traffic packets from the IG to the EG. The method includes the steps of duplicating at least a portion of the incoming traffic packets at the IG to form test packets; sending the test packets through the network in addition to the traffic packets from the IG to the EG. This is followed by determining Quality of Service (QoS) parameters for the test packets received at the EG; and making admission control decision for incoming traffic packets based on determining whether the measured QoS parameters of the test packets meet predefined QoS parameter limits.

In another aspect, the present invention is directed to a resource management system for ensuring QoS in an IP-based network having at least one IG, at least one EG, and at least one intermediate router for routing incoming traffic packets from the IG to the EG. The system includes a packet duplicator in the IG that duplicates at least a portion of the incoming traffic packets to form test packets; a packet transmission function in the IG that sends the test packets through the network to the EG in addition to the traffic packets; and a packet monitor in the EG that determines a QoS parameter for the test packets. The system also includes an admission controller in the EG that makes admission control decisions for incoming traffic packets based on the determined QoS parameter for the test packets. The admission controller then signals a packet blocker in the IG that blocks incoming packets as instructed by the admission controller.

## BRIEF DESCRIPTION OF THE DRAWINGS

For a more complete understanding of the invention, reference is made to the following detailed description taken in conjunction with the accompanying drawings wherein:

Figure 1 is a simplified block diagram of the architecture of an IP network that includes a Packet Duplication Function implemented in the Ingress Gateways, and a Packet Monitoring Function and an Admission Control Function implemented in the Egress Gateways;

Figure 2 is a flowchart illustrating the steps performed by the Admission Control Function when blocking calls in the Ingress Gateway from which lost or delayed test packets originate in one embodiment of the present invention;

Figure 3 is a flowchart illustrating the steps performed by the Admission Control Function in an alternative embodiment of the present invention in which the Admission Control Function uses a more complex coupling matrix to block calls in any Ingress Gateway regardless of the origin of the lost or delayed test packets; and

Figure 4 is a simplified block diagram of an exemplary embodiment of the system of the present invention.

## DETAILED DESCRIPTION OF THE INVENTION

The present invention provides three new functions that are implemented in an IP-based network. The first function, a Packet Duplication Function, is implemented in the Ingress Gateways. Using this function, the Ingress Gateways duplicate the packets, or part of the packets, of incoming real-time traffic. Real-time traffic classes usually have high priority in the network. The duplicated packets are sent to the same destination as the original packets as real-time conditional traffic. In case of high traffic load, real-time conditional packets are delivered by lower priority than original packets or they are discarded. Under normal operating conditions, these packets are delivered as original real-time traffic. In this way, the real-time conditional packets serve as test packets, and they are delayed or discarded first in case of congestion in a router.

The number of duplicated packets depends on application and QoS requirements. In the ideal case, the volume of test packets is negligible when compared to the volume of original traffic. In this way, QoS degradation of the original traffic can be avoided without affecting the original traffic.

The second function, a Packet Monitoring Function, is implemented in the Egress Gateways. This function measures the number of lost and delayed test packets for the real-time traffic classes and compares them with the number of originally sent test packets. The ratio of the number of lost packets, compared to the number of originally sent test packets, and the ratio of delayed packets, compared to the number of originally sent test packets belonging to different real-time traffic classes, serve as a measure of the QoS for the different real-time traffic classes. In addition, other QoS parameters than delay and loss can be monitored as well.

The third function, an Admission Control Function, is also implemented in the Egress Gateways. Based on the information measured by the Monitoring Function, the Admission Control Function determines whether new calls, belonging to the different (real-time and non-real-time) traffic classes, can be admitted. If the lost/duplicated or delayed/duplicated ratio for one or more real-time traffic classes exceed a predefined limit, the Admission Control Function blocks the incoming calls of one or more traffic classes in the one or more Ingress Gateways. A coupling matrix set in the Admission Control Function determines the blocking of the calls. The values of the matrix depend on the routing and the packet discard algorithms used in the routers. The operator may set these values manually based on previous experience or network performance measurements. The values may also be set by an intelligent algorithm that receives network configuration and performance information from, for example, a Network Management System.

The resource management method described above is able to provide QoS for real-time traffic in an IP-based network. The method uses functions implemented in the IP network layer and thus does not need to utilize protocols above the IP network layer in order to provide QoS. In this way, the IP layer does not have to rely on reservation information of a higher layer protocol. This makes it possible for an operator to offer QoS for real-time traffic in an IP-based network.

Another advantage of the present invention is that the functions are based on the periodic or continuous monitoring of the QoS performance of the real-time test packets during the operation. The method is independent of the call setup process, and therefore does not delay call setup. A further advantage is that the functions are simple and, therefore, the process is fast. The method does not require high processing capacity, and is easy to implement. Finally, the method does not require special functionality from interior routers, and thus no special implementation is needed in the interior routers in the IP network.

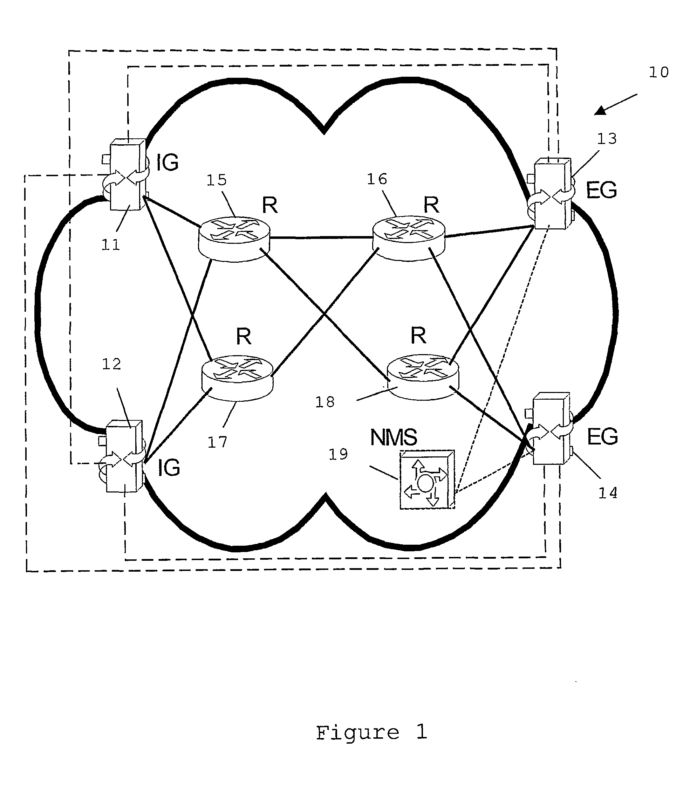

Figure 1 is a simplified block diagram of the architecture of an IP network 10 that includes the Packet Duplication Function implemented in the Ingress Gateways (IGs) 11-12, and the Packet Monitoring Function and the Admission Control Function implemented in the Egress Gateways (EGs) 13-14. The IP network also includes four intermediate Routers (R) 15-18 and a Network Management System (NMS) 19. The user traffic flow in the network is indicated by solid lines, and the flow of the blocking control information is indicated by dashed lines. The Admission Control Function in the EGs can obtain information from the NMS 19. This information flow is indicated by dotted lines.

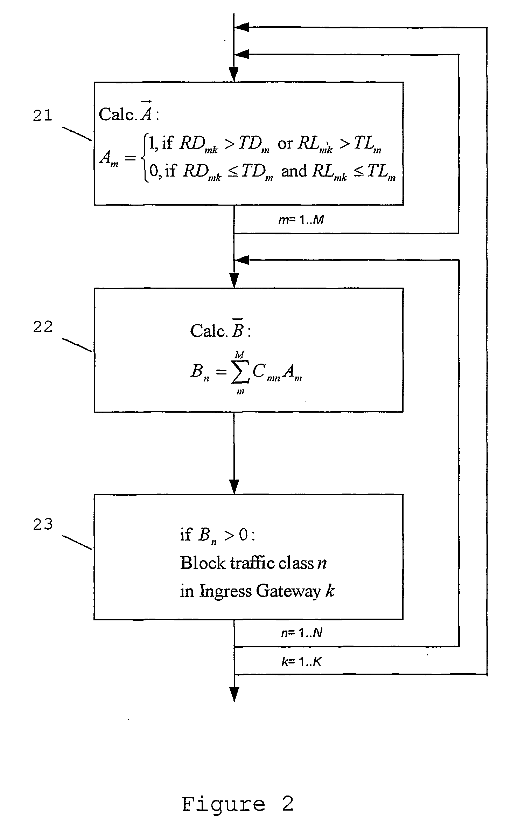

Figure 2 is a flowchart illustrating the steps performed by the Admission Control Function when blocking calls in an IG from which lost or delayed test packets originate in one embodiment of the present invention. If there are "N" number of traffic classes defined in the network, of which "M" are real-time, then N-M are non-real-time traffic classes. The number of IGs is denoted by "K". Real-time traffic classes usually have higher priority than other traffic classes, such as best efforts data. In the intermediate Routers (R), the packets are scheduled and routed according to a scheduling and routing algorithm implemented in the network. The scheduling and routing algorithm is beyond the scope of the present invention and is not discussed further herein.

As described above, the packets of the calls belonging to real-time traffic classes are duplicated by the Packet Duplication Function, which is implemented in the IGs. In one embodiment of the present invention, all packets belonging to real-time calls are duplicated. In another embodiment, only a portion of the packets is duplicated. The duplicated packets serve as test packets in the network. The test packets are sent to the same destination using, in an ideal case, the same route as the original packets. The duplicated packets are sent with the same priority as the original packets but with a "discard first" flag. In case of congestion, the queuing and congestion management system implemented in the routers ensures that test packets are dropped first, and that the original packets are not lost or delayed significantly due to the presence of the test packets. Such a congestion management system is described in EP 1217749, which is hereby incorporated by reference herein.

In another embodiment of the present invention, the test packets are sent as "real-time conditional" traffic. In case of congestion, the queuing and congestion management system implemented in the routers ensures that the test packets are dropped first or are sent by low priority, so that the original packets are not lost or delayed significantly due to the presence of the duplicated packets.

In case of light traffic operational conditions, both the original and test packets arrive at the same rate and with the same delay at the EGs. As the traffic load increases, the test packets, or some of the test packets, are dropped or delayed.

The Packet Monitoring Function measures the fraction or ratio of the number of delayed and lost test packets compared to the number of originally sent test packets for each real-time traffic classes. If these fractional values exceed predefined threshold values, the Admission Control Function blocks the new calls belonging to one or more traffic classes in one or more IG. The traffic classes and IGs where the new calls have to be blocked are determined by the admission control coupling matrix, denoted in Figure 2 by "$C$". The optimum values of the coupling matrix elements depend mainly on the network topology and the routing. The Admission Control Function receives information from the NMS 19 and updates the coupling matrix values if the network topology or routing changes.

In two exemplary embodiments, a simple algorithm and a more complicated algorithm are implemented in the Admission Control Function. Figure 2 shows the simple algorithm of the Admission Control Function. At step 21, the value of an A vector is calculated. The ratio of the number of delayed test packets, compared to the number of originally sent test packets, and the ratio of lost test packets, compared to the number of originally sent test packets, for Ingress Gateway $k$ and traffic class $m$ are denoted by $RD_{mk}$ and $RL_{mk}$, respectively. Corresponding threshold values for delayed and lost test packet ratios are denoted by $TD_m$ and $TL_m$, respectively. The value of the A vector is set at one (1) if $RD_{mx}$ exceeds $TD_m$ or $RL_{mx}$ exceeds $TL_m$. Otherwise, the value of the A vector is set to zero (0). The value of the A vector is calculated for each real-time traffic class $m$ from 1 to $M$.

At step 22, a blocking vector B is calculated by using the coupling matrix:

$$B_n = \sum_m^M C_{nm} A_m \; .$$

At step 23, the elements of the B vector are checked. If $B_n > 0$, the Admission Control Function sends a message to the Ingress Gateway $k$ indicating that calls of the corresponding traffic class are to be blocked in Ingress Gateway $k$. Steps 22 and 23 are repeated for each traffic class $n$ defined in the network, from 1 to $N$. Steps 21-23 are repeated for each Ingress Gateway $k$, from 1 to $K$.

In this simple implementation method, the algorithm is able to block the calls in the same Ingress Gateway from which the delayed or lost test packets originate. In the simplest case, the coupling matrix is unity. In this case, only those calls that belong to the same traffic class as the lost or delayed test packets are blocked. The coupling matrix values are not necessarily the same in each Ingress Gateway.

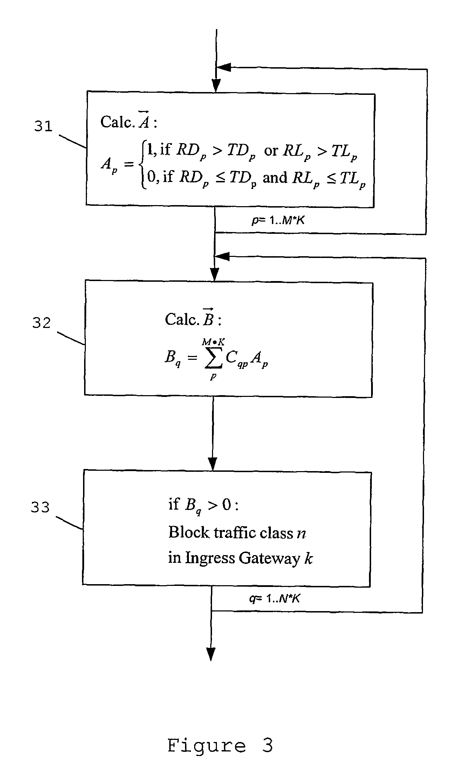

Figure 3 is a flowchart illustrating the steps performed by the Admission Control Function in an alternative embodiment of the present invention in which the Admission Control Function uses a more complex coupling matrix to block calls in any Ingress Gateway regardless of the origin of the lost or delayed test packets. At step 31, the A vector is calculated for each of the Ingress Gateways $k$ and real-time traffic classes $m$, where p = m+(k-1)*M, (i.e., p = 1..M*K).

At step 32, the blocking vector B is calculated for each traffic class and Ingress Router by using the coupling matrix:

$$B_q = \sum_p^{M \bullet K} C_{qp} A_p$$

where q = n+ (k-1)N, (i.e., q = 1 .. N*K) . Then, at step 33, if $B_q > 0$, the calls of the corresponding traffic class $n$ are blocked in the corresponding Ingress Gateway $k$. Thus, the dimension of the A vector is M*K; the dimension of the B vector is N*K, and the dimension of the coupling matrix is M*K x M*N. Steps 32 and 33 are repeated for each q, from 1 to N*K.

The Admission Control Algorithm can be run for each new call or it can be run periodically. It can be triggered internally or externally. If calls in an Ingress Gateway are blocked during one running period, new calls may be allowed after the next running period if the QoS requirements of the corresponding test packets are met. The more frequently the algorithm is run, the shorter is the blocking period until an Ingress Gateway can again allow a new call. On the other hand, frequent running of the algorithm requires higher processing capacity. Therefore, the network operator must weigh this tradeoff when defining the interval between the times that the Admission Control Algorithm is run.

Using the Resource Management Method of the present invention, three main operational states can be distinguished in the network.

(1) In case of low traffic, both the test packets and the original packets meet QoS requirements, and therefore test packets are not delayed or dropped. In this situation, the Admission Control Algorithm does not limit new incoming calls.

(2) If traffic increases, a portion of the test packets are delayed or dropped, but the ratios of the delayed test packets or dropped test packets, compared to the number of originally sent test packets, do not reach the critical value. In this situation, the Admission Control Algorithm does not limit new incoming calls.

(3) If the ratios of the delayed test packets or dropped test packets reach the critical value, new incoming calls belonging to the appropriate traffic class are blocked in the appropriate Ingress Gateways.

The Resource Management Method may be applied in a single IP network, or may be applied at the border of a domain that consists of several IP networks. The method may also be used together with other types of protocols providing QoS in a network, and can be used as part of an end-to-end QoS protocol, as well.

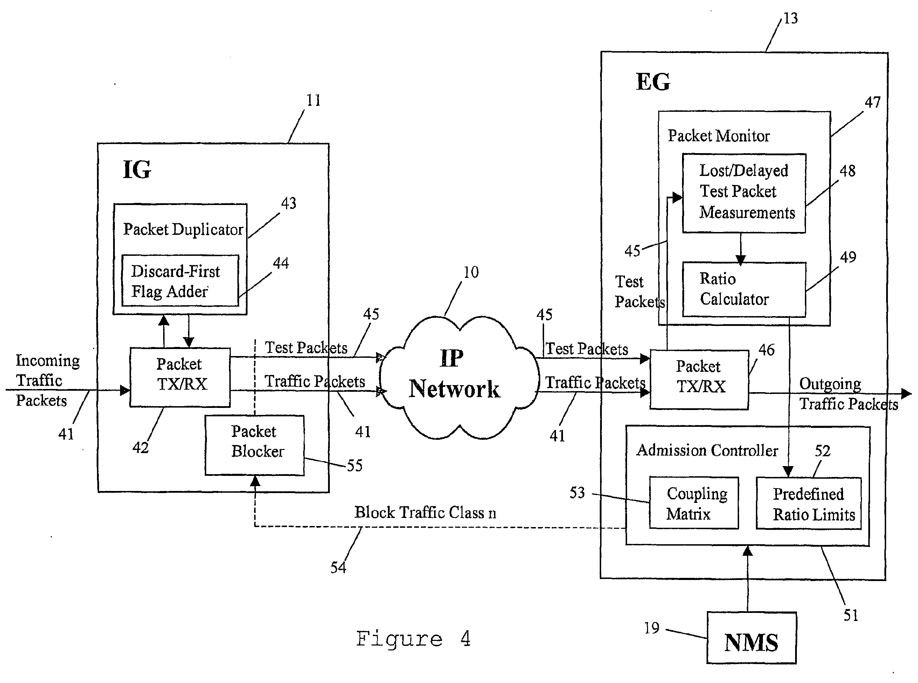

Figure 4 is a simplified block diagram of an exemplary embodiment of the system of the present invention. The system is shown to include the IP network 10, the Ingress Gateway (IG) 11, the Egress Gateway (EG) 13, and the NMS 19. Incoming traffic packets 41 are received in a packet transmitting and receiving function (Packet TX/RX) 42 in the IG. Some or all of the incoming packets are duplicated in a Packet Duplicator 43 to create test packets. The Packet Duplicator may include a Discard-First Flag Adder 44, which adds a flag to the header of each duplicated packet indicating that in the case of congestion, the test packets are to be discarded first.

The Packet TX/RX 42 then sends test packets 45 through the network 10 along with the traffic packets 41 to the EG 13. The packets are received in a Packet TX/RX 46, and are forwarded to a Packet Monitor 47. In the Packet Monitor, the number of lost test packets and delayed test packets is measured in a Lost/Delayed Test Packet Measurements function 48. These measurements are then utilized in a Ratio Calculator 49 to calculate the ratio of the number of lost packets, compared to the number of originally sent test packets, and the ratio of delayed packets, compared to the number of originally sent test packets belonging to different real-time traffic classes. The calculated ratios are sent to an Admission Controller 51 where they are compared to predefined ratio limits 52. If the calculated ratios are above the predefined ratio limits, a Coupling Matrix 53 identifies the traffic classes and IGs where new calls need to be blocked. The Admission Controller then sends a signal 54 to a Packet Blocker 55 in the identified IG 11, which blocks incoming packets in the identified traffic class n. The NMS 19 may provide the Admission Controller with information for the Coupling Matrix, the predefined ratio limits, and a time interval for performing QoS testing and call blocking/unblocking.

**Claims**

1. A method of ensuring Quality of Service (QoS) for real-time traffic in an Internet Protocol (IP)-based network having at least one Ingress Gateway (IG), at least one Egress Gateway (EG), and at least one intermediate router for routing incoming traffic packets from the IG to the EG, said method **characterized by**:

   duplicating at least a portion of the incoming traffic packets at the IG to form test packets;
   sending the test packets through the network in addition to the traffic packets;
   determining QoS parameters for the test packets at the EG; and
   making admission control decisions at the EG for incoming traffic packets based on the determined QoS parameters for the test packets.

2. The method of claim 1, wherein the step of determining QoS parameters for the test packets is **characterized by** determining a lost-packet ratio and/or a delayed-packet ratio for the test packets, and the step of making admission control decisions is **characterized by** making admission control decisions for incoming traffic packets based on the lost-packet ratio and/or the delayed-packet ratio for the test packets.

3. The method of claim 2, further **characterized by** marking the test packets prior to sending the test packets through the network, said marking designating the test packets as being the first packets to be discarded or delayed in case of congestion at one of the intermediate routers.

4. The method of claim 3, wherein the step of determining a lost-packet ratio and/or a delayed-packet ratio for the test packets is **characterized by**:

   measuring the number of lost test packets and the number of delayed test packets at the EG; and
   dividing the number of lost test packets and the number of delayed test packets by the number of test packets originally sent through the network.

5. The method of claim 1, wherein the step of making admission control decisions is **characterized by** blocking traffic packets in at least one IG upon determining that the determined QoS parameters of the test packets do not meet predefined QoS parameter limits.

6. The method of claim 5, wherein the step of blocking traffic packets is **characterized by** blocking traffic packets only in the IG in which the test packets originated that did not meet the predefined QoS parameter limits.

7. The method of claim 1, wherein the step of making admission control decisions is **characterized by**:

   determining whether the determined QoS parameter of the test packets in identified traffic classes meets a predefined QoS parameter limit; and
   blocking traffic packets only in the identified traffic classes for which test packets did not meet the predefined QoS parameter limits.

8. The method of claim 7, wherein the step of determining whether the determined QoS parameters of the test packets meet predefined QoS parameter limits is **characterized by**:

   determining for each real-time traffic class $m$ ($m = 1..M$), whether the value of an $A$ vector is 1 or 0, wherein the value of the A vector is 1 if $RD_{mk}$ exceeds $TD_m$ or $RL_{mk}$ exceeds $TL_m$, where $RD_{mk}$ and $RL_{mk}$ are the ratio of the number of delayed test packets and the ratio of the number of lost test packets, respectively, compared to the number of test packets in real-time traffic class m that were originally sent from Ingress Gateway $k$ ($IG_k$), and $TD_m$ and $TL_m$ are the corresponding predefined QoS parameter limits, and wherein the value of the $A$ vector is 0 if $RD_{mk}$ does not exceed $TD_m$, and $RL_{mk}$ does not exceed $TL_m$;
   calculating elements of a blocking vector $B$, for each traffic class $n$ defined in the network ($n = 1..N$), by using a coupling matrix $C$ using the equation: $B_n = \sum_{m}^{M} C_{nm} A_m$ ; and
   blocking packets of the corresponding traffic class $n$ in Ingress Gateway $k$, if $B_n > 0$.

9. The method of claim 8, further comprising repeating the steps of claim 8 for each $IG_k$ ($k = 1..K$) in the network.

10. The method of claim 5, wherein the step of blocking traffic packets is **characterized by** blocking traffic packets in any IG regardless of the IG in which the test packets originated that did not meet the predefined QoS parameter limits.

11. The method of claim 10, wherein the step of making admission control decisions is **characterized by**:

   determining for each $IG_k$ and for each real-time traffic class $m$ defined in the network, whether the value of an $A$ vector is 1 or 0, wherein the value of the $A$ vector is 1 if $RD_p$ exceeds $TD_p$ or $RL_p$ exceeds $TL_p$, where $p = m+(k-1)*M$, and $RD_p$ and $RL_p$ are the ratio of the number of delayed test packets and the ratio of the number of lost test packets, respectively, compared to the number of test packets in real-time traffic class m that were originally sent from Ingress Gateway $k$ ($IG_k$), and where $TD_p$ and $TL_p$ are the corresponding predefined QoS parameter limits, and wherein the value of the A vector is 0 if $RD_p$ does not exceed $TD_p$, and $RL_p$ does not exceed $TL_p$;
   calculating elements of a blocking vector $B$ for each real-time traffic class $m$ ($m = 1..M$) and $IG_k$ using a coupling matrix C using the equation:

   $$B_q = \sum_{p}^{M \cdot K} C_{qp} A_p$$ ;

   blocking packets of the corresponding traffic class n in $IG_k$, if $B_q > 0$; and
   for each $q$ ($q=1..N*K$), determining a new value for the $A$ vector, calculating a new blocking vector $B$, and blocking packets of the corresponding traffic class $n$ in $IG_k$, if $Bq > 0$.

12. A resource management system for ensuring Quality of Service (QoS) in an Internet Protocol (IP)-based network having at least one Ingress Gateway (IG), at least one Egress Gateway (EG), and at least one intermediate router for routing incoming traffic packets from the IG to the EG, said system comprising:

   a packet duplicator in the IG adapted to duplicate at least a portion of the incoming traffic packets to form test packets;
   a packet transmission function in the IG adapted to send the test packets through the network to the EG in addition to the traffic packets;
   a packet monitor in the EG adapted to determine a QoS parameter for the test packets;
   an admission controller in the EG adapted to make admission control decisions for incoming traffic packets based on the determined QoS parameter for the test packets; and

a packet blocker in the IG adapted to block incoming packets as instructed by the admission controller.

13. The resource management system of claim 12, wherein the packet duplicator includes a flag adder adapted to add a flag to a header for each of the test packets prior to sending the test packets through the network, said flag designating the test packets as being the first packets to be discarded or delayed in case of congestion at one of the intermediate routers.

14. The resource management system of claim 12, wherein the packet monitor includes:

a measuring function adapted to measure the number of lost test packets and the number of delayed test packets; and
a ratio calculator adapted to calculate a lost-packet ratio and a delayed-packet ratio for the test packets by dividing the number of lost test packets and the number of delayed test packets by the number of test packets originally sent through the network.

15. The resource management system of claim 14, wherein the admission controller includes:

a comparing function adapted to compare the calculated lost-packet ratio and/or delayed-packet ratio for the test packets with corresponding predefined threshold limits; and
a coupling matrix adapted to determine a class of incoming traffic packets to block, and further adapted to identify an IG in which to block the packets, if either the calculated lost-packet ratio or the calculated delayed-packet ratio exceeds a corresponding threshold limit.

**Patentansprüche**

1. Verfahren zur Sicherstellung der Dienstgüte (Quality of Service, QoS) für Echtzeitverkehr in einem Internetprotokoll- (IP-) basierten Netz, das mindestens ein Eingangs-Gateway (Ingress Gateway, IG), mindestens ein Ausgangs-Gateway (Egress Gateway, EG) und mindestens einen Zwischenrouter zum Routen von Paketen des ankommenden Verkehrs von dem IG zu dem EG aufweist, wobei das Verfahren **gekennzeichnet ist durch**:

Duplizieren mindestens eines Teils der Pakete des ankommenden Verkehrs an dem IG, um Testpakete zu bilden;
Senden der Testpakete **durch** das Netz, zusätzlich zu den Verkehrspaketen;
Bestimmen von QoS-Parametern für die Testpakete an dem EG; und
Treffen von Entscheidungen zu Zugangskontrolle an dem EG für Pakete des ankommenden Verkehrs, basierend auf den bestimmten QoS-Parametern für die Testpakete.

2. Verfahren nach Anspruch 1, wobei der Schritt des Bestimmens von QoS-Parametern für die Testpakete **gekennzeichnet ist durch** das Bestimmen eines Anteils verlorener Pakete und/oder eines Anteils verzögerter Pakete für die Testpakete, und der Schritt des Treffens von Entscheidungen zu Zugangskontrolle **gekennzeichnet ist durch** das Treffen von Entscheidungen zu Zugangskontrolle für Pakete des ankommenden Verkehrs, basierend auf dem Anteil verlorener Pakete und/oder dem Anteil verzögerter Pakete für die Testpakete.

3. Verfahren nach Anspruch 2, ferner **gekennzeichnet durch** Markieren der Testpakete vor dem Senden der Testpakete durch das Netz, wobei das Markieren die Testpakete als die ersten Pakete kennzeichnet, die im Falle eines Staus an einem der Zwischenrouter zu verwerfen oder zu verzögern sind.

4. Verfahren nach Anspruch 3, wobei der Schritt des Bestimmens eines Anteils verlorener Pakete und/oder eines Anteils verzögerter Pakete für die Testpakete **gekennzeichnet ist durch**:

Messen der Anzahl verlorener Testpakete und der Anzahl verzögerter Testpakete an dem EG; und
Dividieren der Anzahl verlorener Testpakete und der Anzahl verzögerter Testpakete **durch** die Anzahl der Testpakete, die ursprünglich **durch** das Netz gesendet wurden.

5. Verfahren nach Anspruch 1, wobei der Schritt des Treffens von Entscheidungen zu Zugangskontrolle **gekennzeichnet ist durch** das Blockieren von Verkehrspaketen in mindestens einem IG, wenn ermittelt wird, dass die bestimmten QoS-Parameter der Testpakete nicht vordefinierten Grenzwerten für QoS-Parameter genügen.

6. Verfahren nach Anspruch 5, wobei der Schritt des Blockierens von Verkehrspaketen **gekennzeichnet ist durch** das Blockieren von Verkehrspaketen nur in dem IG, von welchem die Testpakete stammten, welche nicht den vordefinierten Grenzwerten für QoS-Parameter genügten.

7. Verfahren nach Anspruch 1, wobei der Schritt des Treffens von Entscheidungen zu Zugangskontrolle **gekennzeichnet ist durch**:

Bestimmen, ob der bestimmte QoS-Parameter der Testpakete in identifizierten Verkehrsklassen einem vordefinierten Grenzwert für QoS-Parameter genügt; und
Blockieren von Verkehrspaketen nur in den identifizierten Verkehrsklassen, für welche Testpakete nicht den vordefinierten Grenzwerten für QoS-Parameter genügten.

8. Verfahren nach Anspruch 7, wobei der Schritt des Bestimmens, ob die bestimmten QoS-Parameter der Testpakete vordefinierten Grenzwerten für Qos-Parameter genügen, **gekennzeichnet ist durch**:

   Bestimmen für jede Echtzeit-Verkehrsklasse $m$ ($m = 1,..., M$), ob der Wert eines Vektors $A$ gleich 1 oder 0 ist, wobei der Wert des Vektors $A$ gleich 1 ist, falls $RD_{mk}$ größer als $TD_m$ ist oder $RL_{mk}$ größer als $TL_m$ ist, wobei $RD_{mk}$ und $RL_{mk}$ das Verhältnis der Anzahl verzögerter Testpakete bzw. das Verhältnis der Anzahl verlorener Testpakete zu der Anzahl von Testpaketen in der Echtzeit-Verkehrsklasse $m$, welche ursprünglich von dem Eirigangs-Gateway $k$ ($IG_k$) aus gesendet wurden, ist und $TD_m$ und $TL_m$ die entsprechenden vordefinierten Grenzwerte für QoS-Parameter sind, und wobei der Wert des Vektors $A$ gleich 0 ist, falls $RD_{mk}$ nicht größer als $TD_m$ ist und $RL_{mk}$ nicht größer als $TL_m$ ist;
   Berechnen von Elementen eines Blockierungsvektors $B$ für jede Verkehrsklasse $n$, die in dem Netz definiert ist ($n = 1, .., N$), **durch** Verwenden einer Kopplungs-matrix $C$ unter Verwendung der Gleichung: $B_n = \sum_m^M C_{n,m} A_m$ ; und

   Blockieren von Paketen der entsprechenden Verkehrsklasse $n$ in dem Eingangs-Gateway $k$, falls $B_n > 0$.

9. Verfahren nach Anspruch 8, welches ferner das Wiederholen der Schritte von Anspruch 8 für jedes $IG_k$ ($k = 1, ... , K$) in dem Netz umfasst.

10. Verfahren nach Anspruch 5, wobei der Schritt des Blockierens von Verkehrspaketen **gekennzeichnet ist durch** das Blockieren von Verkehrspaketen in jedem beliebigen 1G, unabhängig von dem IG, von welchem die Testpakete stammten, welche nicht den vordefinierten Grenzwerten für QoS-Parameter genügten.

11. Verfahren nach Anspruch 10, wobei der Schritt des Treffens von Entscheidungen der Zugangskontrolle **gekennzeichnet ist durch**:

   Bestimmen für jedes $IG_k$ und für jede Echtzeit-Verkehrsklasse $m$, die in dem Netz definiert ist, ob der Wert eines Vektors $A$ gleich 1 oder 0 ist, wobei der Wert des Vektors $A$ gleich 1 ist, falls $RD_p$ größer als $TD_p$ ist oder $RL_p$ größer als $TL_p$ ist, wobei $p = m + (k-1)*M$ ist und $RD_p$ und $RL_p$ das Verhältnis der Anzahl verzögerter Testpakete bzw. das Verhältnis der Anzahl verlorener Testpakete zu der Anzahl von Testpaketen in der Echtzeit-Verkehrsklasse $m$, welche ursprünglich von dem Eingangs-Gateway $k$ ($IG_k$) aus gesendet wurden, ist und $TD_p$ und $TL_p$ die entsprechenden vordefinierten Grenzwerte für QoS-Parameter sind, und wobei der Wert des Vektors $A$ gleich 0 ist, falls $RD_p$ nicht größer als $TD_p$ ist und $RL_p$ nicht größer als $TL_p$ ist;
Berechnen von Elementen eines Blockierungsvektors $B$ für jede Echtzeit-Verkehrsklasse $m$ ($m = 1, ..., M$) und $IG_k$ unter Verwendung einer Kopplungsmatrix $C$ unter Verwendung der Gleichung: $B_q = \sum_p^{M*K} C_{qp} A_p$ ;
Blockieren von Paketen der entsprechenden Verkehrsklasse $n$ in $IG_k$, falls $B_q > 0$; und
für jedes $q$ ($q = 1, ..., N*K$), Bestimmen eines neuen Wertes für den Vektor A, Berechnen eines neuen Blockierungsvektors $B$ und Blockieren von Paketen der entsprechenden Verkehrsklasse $n$ in $IG_k$, falls $B_q > 0$.

12. Ressourcenmanagementsystem zur Sicherstellung der Dienstgüte (Quality of Service, QoS) für Echtzeitverkehr in einem Internetprotokoll- (IP-) basierten Netz, das mindestens ein Eingangs-Gateway (Ingress Gateway, IG), mindestens ein Ausgangs-Gateway (Egress Gateway, EG) und mindestens einen Zwischenrouter zum Routen von Paketen des ankommenden Verkehrs von dem IG zu dem EG aufweist, wobei das System umfasst:

   einen Paketduplikator in dem IG, der geeignet ist, mindestens einen Teil der Pakete des ankommenden Verkehrs zu duplizieren, um Testpakete zu bilden;
   eine Paketübertragungsfunktion in dem IG, die geeignet ist, die Testpakete durch das Netz zu dem EG zu senden, zusätzlich zu den Verkehrspaketen;
   einen Paketmonitor in dem EG, der geeignet ist, einen QoS-Parameter für die Testpakete zu bestimmen;
   eine Zugangskontrolleinrichtung (Admission Controller) in dem EG, die geeignet ist, Entscheidungen zu Zugangskontrolle für Pakete des ankommenden Verkehrs zu treffen, basierend auf dem bestimmten QoS-Parameter für die Testpakete; und
   Einen Paketblockierer in dem IG, der geeignet ist, entsprechend den Anweisungen von der Zugangskontrolleinrichtung ankommende Pakete zu blockieren.

13. Ressourcenmanagementsystem nach Anspruch 12, wobei der Paketduplikator einen Flag-Adder enthält, der geeignet ist, für jedes der Testpakete vor dem Senden der Testpakete durch das Netz ein Flag zu einem Nachrichtenkopf hinzuzufügen, wobei das Flag die Testpakete als die ersten Pakete kennzeichnet, die im Falle eines Staus an einem der Zwischenrouter zu verwerfen oder zu verzögern sind.

14. Ressourcenmanagementsystem nach Anspruch 12, wobei der Paketmonitor enthält:

eine Messfunktion, die geeignet ist, die Anzahl verlorener Testpakete und die Anzahl verzögerter Testpakete zu messen; und
einen Verhältnisrechner, der geeignet ist, einen Anteil verlorener Pakete und einen Anteil verzögerter Pakete für die Testpakete durch Dividieren der Anzahl verlorener Testpakete und der Anzahl verzögerter Testpakete durch die Anzahl der Testpakete, die ursprünglich durch das Netz gesendet wurden, zu berechnen.

15. Ressourcenmanagementsystem nach Anspruch 14, wobei die Zugangskontrolleinrichtung enthält:

eine Vergleichsfunktion, die geeignet ist, den berechneten Anteil verlorener Pakete und/oder Anteil verzögerter Pakete für die Testpakete mit entsprechenden vordefinierten Schwellengrenzwerten zu vergleichen; und
eine Kopplungsmatrix, die geeignet ist, eine Klasse von Paketen des ankommenden Verkehrs zu bestimmen, die zu blockieren sind, und ferner geeignet ist, ein IG zu identifizieren, in welchem die Pakete zu blockieren sind, falls entweder der berechnete Anteil verlorener Pakete oder der berechnete Anteil verzögerter Pakete einen entsprechenden Schwellengrenzwert übersteigt.

**Revendications**

1. Procédé pour garantir une qualité de service (QoS) pour du trafic en temps réel dans un réseau basé sur le protocole Internet (IP) comportant au moins une passerelle d'entrée (IG), au moins une passerelle de sortie (EG) et au moins un routeur intermédiaire pour router les paquets de trafic entrants de l'IG vers l'EG, ledit procédé étant **caractérisé par** les étapes consistant à :

dupliquer au moins une portion des paquets de trafic entrants au niveau de l'IG afin de former des paquets de test ;

envoyer les paquets de test à travers le réseau en plus des paquets de trafic ;
déterminer les paramètres QoS pour les paquets de test au niveau de l'EG et
prendre des décisions de commande d'admission au niveau de l'EG pour les paquets de trafic entrants sur la base des paramètres QoS déterminés pour les paquets de test.

2. Procédé selon la revendication 1, dans lequel l'étape de détermination des paramètres QoS pour les paquets de test est **caractérisée par** la détermination d'un rapport de paquets perdus et/ou un rapport de paquets retardés pour les paquets de test, et l'étape de prise de décisions de commande d'admission est **caractérisée par** la prise de décisions de commande d'admission pour les paquets de trafic entrants sur la base du rapport de paquets perdus et/ou du rapport de paquets retardés pour les paquets de test.

3. Procédé selon la revendication 2, **caractérisé en outre par** le marquage des paquets de test avant d'envoyer les paquets de test à travers le réseau, ledit marquage désignant les paquets de test comme étant les premiers paquets à rejeter ou retarder en cas d'engorgement au niveau d'un des routeurs intermédiaires.

4. Procédé selon la revendication 3, dans lequel l'étape de détermination d'un rapport de paquets perdus et/ou d'un rapport de paquets retardés pour les paquets de test est **caractérisé par** les étapes consistant à :

mesurer le nombre de paquets de test perdus et le nombre de paquets de test retardés au niveau de l'EG ; et
diviser le nombre de paquets de test perdus et le nombre de paquets de test retardés par le nombre de paquets de test envoyés à l'origine à travers le réseau.

5. Procédé selon la revendication 1, dans lequel l'étape de prise de décisions de commande d'admission est **caractérisée par** le blocage des paquets de trafic dans au moins un IG lors de la détermination que les paramètres QoS déterminés des paquets de test ne satisfont pas aux limites de paramètres QoS prédéfinies.

6. Procédé selon la revendication 5, dans lequel l'étape de blocage des paquets de trafic est **caractérisée par** le blocage des paquets de trafic uniquement dans l'IG dans lequel les paquets de test émanaient qui ne satisfont pas aux limites de paramètres QoS prédéfinies.

7. Procédé selon la revendication 1, dans lequel l'étape de prise de décisions de commande d'admission est **caractérisée par** les étapes consistant à :

déterminer si le paramètre QoS déterminé des paquets de test dans des classes de trafic identifiées satisfait à une limite de paramètre QoS prédéfinie ; et
bloquer les paquets de trafic uniquement dans les classes de trafic identifiées pour lesquelles des paquets de test ne satisfaisaient pas aux limites de paramètres QoS prédéfinies.

8. Procédé selon la revendication 7, dans lequel l'étape consistant à déterminer si les paramètres QoS déterminés des paquets de test satisfont à des limites de paramètres QoS prédéfinies est **caractérisée par** les étapes consistant à :

déterminer pour chaque classe dz trafic en temps réel m (m=1...M) si la valeur d'un vecteur A est 1 ou 0, moyennant quoi la valeur du vecteur A est 1 si $RD_{mk}$ excède $TD_m$ ou $RL_{mk}$ excède $TL_m$, où $RD_{mk}$ et $RL_{mk}$ sont le rapport de nombre de paquets de test retardés et le rapport du nombre de paquets de test perdus, respectivement, comparé au nombre de paquets de test dans la classe de trafic en temps réel m qui ont été envoyés à l'origine de la passerelle d'entrée k ($IG_k$) et $TD_m$ et $TL_m$ sont les limites de paramètre Qos prédéfini correspondant, et moyennant quoi la valeur du vecteur A est 0 si $RD_{mk}$ n'excède pas $TD_m$ et $RL_{mk}$ n'excède pas $TL_m$ ;
calculer des éléments d'in vecteur de blocage B pour chaque classe de trafic n définie dans le réseau (n=1...N) en utilisant une matrice de couplage C utilisant l'équation : $B_n = \sum_{m}^{M} C_{nm} A_m$ ; et

bloquer des paquets de la classe de trafic n correspondante dans la passerelle d'entrée k, si Bn > 0.

9. Procédé selon la revendication 8, comprenant en outre la répétition des étapes de la revendication 8 pour chaque $IG_k$ (k=1...K) dans le réseau.

10. Procédé selon la revendication 5, dans lequel l'étape de blocage du trafic est **caractérisée par** le blocage des paquets de trafic dans n'importe quel IG sans tenir compte de l'IG dans lequel les paquets de test émanaient qui ne satisfont pas aux limites de paramètre QoS prédéfinies.

11. Procédé selon la revendication 10, dans lequel l'étape de prise de décisions de commande d'admission est **caractérisée par** les étapes consistant à :

déterminer pour chaque IG et pour chaque classe de trafic en temps réel m définie dans le réseau si la valeur d'un vecteur A est 1 ou 0, moyennant quoi la valeur du vecteur A est 1 si $RD_p$ excède $TD_p$ ou $RL_p$ excède $TL_p$, où p=m+ (k-1)*M et $RD_p$ et $RL_p$ sont le rapport du nombre de paquets de test retardés et le rapport du nombre de paquets de test perdus, respectivement, comparé au nombre de paquets de test dans le classe de trafic en temps réel m qui ont été envoyés à l'origine de la passerelle d'entrée k ($IG_k$) et où $TD_p$ et $TL_p$ sont les limites de paramètres QoS prédéfinies correspondantes, et moyennant quoi la valeur du vecteur A est 0 si $RD_p$ n'excède pas $TD_p$, et $RL_p$ n'excède pas $TL_p$ ;
calculer des éléments d'un vecteur de blocage B pour chaque classe de trafic en temps réel m (m=1...M) et $IG_k$ en utilisant une matrice de couplage C utilisant l'équation : $B_q = \sum_{p}^{M*K} C_{qp} A_p$ ;

bloquer des paquets de la classe de trafic n correspondante dans $IG_k$, si Bq > 0 ; et
pour chaque q (q=1..N*K), déterminer une nouvelle valeur pour le vecteur A, calculer un nouveau vecteur de blocage B et bloquer les paquets de la classe de trafic n correspondante dans $IG_k$, si Bq > 0.

12. Système de gestion de ressources pour garantir une qualité de service (QoS) dans un réseau basé sur le protocole Internet (IP) comportant au moins une passerelle d'entrée (IG), au moins une passerelle de sortie (EG) et au moins un routeur intermédiaire pour router les paquets de trafic entrants de l'IG vers l'EG, ledit système comprenant :

un duplicateur de paquets dans l'IG adapté afin de dupliquer au moins une portion des paquets de trafic entrants afin de former des paquets de test ;
une fonction de transmission de paquets dans l'IG adaptée afin d'envoyer les paquets de test à travers le réseau vers l'EG en plus des paquets de trafic ;
un moniteur de paquets dans l'EG adapté afin de déterminer un paramètre QoS pour les paquets de test ; un contrôleur d'admission dans l'EG adapté afin de prendre des décisions de commande d'admission pour les paquets de trafic entrants sur la base du paramètre QoS déterminé pour les paquets de test ; et
un bloqueur de paquets dans l'IG adapté afin de bloquer des paquets entrants selon les instructions du contrôleur d'admission.

13. Système de gestion de ressources de la revendication 12, dans lequel le duplicateur de paquets inclut un dispositif d'ajout de fanion adapté afin d'ajouter un fanion à un en-tête pour chacun des paquets de test avant d'envoyer les paquets de test à travers le réseau, ledit fanion désignant les paquets de test comme étant les premiers paquets à rejeter ou retarder en cas d'engorgement au niveau d'un des routeurs intermédiaires.

14. Système de gestion de ressources selon la revendication 12, dans lequel le moniteur de paquets inclut :

> une fonction de mesure adaptée afin de mesurer le nombre de paquets de test perdus et le nombre de paquets de test retardés ; et un calculateur de rapport adapté afin de calculer un rapport de paquets perdus et un rapport de paquets retardés pour les paquets de test en divisant le nombre de paquets de test perdus et le nombre de paquets de test retardés par le nombre de paquets de test envoyés à l'origine à travers le réseau.

15. Système de gestion de ressources selon la revendication 14, dans lequel le contrôleur d'admission inclut :

> une fonction de comparaison adaptée afin de comparer le rapport de paquets perdus et/ou le rapport de paquets retardés calculé pour les paquets de test avec des limites seuil prédéfinies correspondantes ; et une matrice de couplage adaptée afin de déterminer une classe de paquets de trafic entrants à bloquer et adaptée en outre afin d'identifier un IG dans lequel bloquer les paquets, si soit le rapport de paquets perdus calculé, soit le rapport de paquets retardés calculé excède une limite seuil correspondante.

Figure 1

21

Calc. $\vec{A}$ :

$$A_m = \begin{cases} 1, \text{if } RD_{mk} > TD_m \text{ or } RL_{mk} > TL_m \\ 0, \text{if } RD_{mk} \leq TD_m \text{ and } RL_{mk} \leq TL_m \end{cases}$$

$m = 1..M$

22

Calc. $\vec{B}$ :

$$B_n = \sum_m^M C_{nm} A_m$$

23

if $B_n > 0$ :

Block traffic class $n$

in Ingress Gateway $k$

$n = 1..N$

$k = 1..K$

Figure 2

**31** Calc. $\vec{A}$ :

$$A_p = \begin{cases} 1, \text{if } RD_p > TD_p \text{ or } RL_p > TL_p \\ 0, \text{if } RD_p \leq TD_p \text{ and } RL_p \leq TL_p \end{cases}$$

$p = 1..M^*K$

**32** Calc. $\vec{B}$ :

$$B_q = \sum_p^{M \bullet K} C_{qp} A_p$$

**33** if $B_q > 0$ :

Block traffic class $n$

in Ingress Gateway $k$

$q = 1..N^*K$

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1217749 A
- EP 0999674 A

- EP 1168755 A
- EP 0944289 A

**Non-patent literature cited in the description**

- **R. BRADEN et al.** Resource Reservation Protocol (RSVP. *RFC 2205,* September 1995

- **H. SCHULZRINNE et al.** RTP: A Transport Protocol for Real Time Applications. *RFC 1889*